# EUROPEAN PATENT APPLICATION

(11) **EP 4 760 874 A1**
(43) Date of publication of application: **17.06.2026**
(21) Application number: 25738832.2
(22) Date of filing: 08.01.2025
(51) Int. Cl.: H01M 10/617, H01M 50/51, H01M 10/48, H01M 10/635, H01M 10/44, H01M 50/258

(54) **BATTERY PACK AND OPERATING METHOD THEREOF**

(30) Priority: 10.01.2024 KR 20240004226
(71) Applicant: LG Energy Solution, Ltd., Seoul 07335 (KR)
(72) Inventor: KIM, Duk You, Daejeon 34122 (KR); LEE, Keun Wook, Daejeon 34122 (KR)
(74) Representative: Plasseraud IP
(86) International application number: PCT/KR2025/000370
(87) International publication number: WO 2025/150865

(57) **Abstract**

A battery pack according to an embodiment disclosed in this document includes a first module including a plurality of battery cells, a second module connected in series to the first module and disposed in a first direction from the first module, and a third module connected in series to the second module and in the first direction from the second module, wherein the first module, the second module and the third module have capacities different from each other.

## Description

### TECHNICAL FIELD

### CROSS-REFERENCE TO RELATED APPLICATION

The present application claims the priority of Korean Patent Application No. 10-2024-0004226, filed on January 10, 2024, in the Korean Intellectual Property Office, the disclosure of which is incorporated herein by reference.

### TECHNICAL FIELD

Embodiments disclosed in this document relate to a battery pack and a method for operating the same.

### BACKGROUND ART

Recently, research and development on secondary batteries has been actively conducted. Here, secondary batteries are batteries that are rechargeable and dischargeable, and include all conventional Ni/Cd batteries, Ni/MH batteries, and recent lithium-ion batteries. Among secondary batteries, the lithium-ion batteries have the advantage of having a much higher energy density than the conventional Ni/Cd batteries and Ni/MH batteries. In addition, the lithium-ion batteries are manufactured to be small and lightweight and thus used as power sources for mobile devices. In addition, the lithium-ion batteries are attracting attention as a next-generation energy storage medium as their scope of use are expanded as power sources for electric vehicles.

In addition, the secondary batteries may be generally utilized as battery packs, which include battery modules in which a plurality of battery cells are connected in series and/or in parallel. In addition, the secondary battery may be utilized as a battery rack including a plurality of battery modules and a rack frame accommodating the battery modules.

All the battery modules contained in the battery pack are connected in series and share the same current. Among these, the module at a central portion of the battery pack may exhibit a relatively high temperature because the module is surrounded by other modules and does not release heat. On the other hand, the modules disposed on the periphery of the battery pack may release heat to the outside, resulting in relatively low temperatures. Since the temperature rise of the module adversely affects the battery lifespan, a method for reducing the current of the entire module included in the battery pack is used to lower the temperature of the module at the central portion. Such a method had a problem that an output of the entire battery is limited by the temperature of the module, which is the worst condition.

### DISCLOSURE OF THE INVENTION

### TECHNICAL PROBLEM

An object of embodiments disclosed in this document is to provide a battery pack that alleviates a temperature difference between battery modules, and a method for operating the same.

An object of embodiments disclosed in this document is to provide a battery pack that alleviates a temperature difference between battery modules by adjusting an arrangement of the battery modules having different capacities, and a method for operating the same.

An object of embodiments disclosed in this document is to provide a battery pack that alleviates a temperature difference between battery modules to prevent an output of a battery from being limited, and a method for operating the same.

Technical objects of embodiments described in this document are not limited to the technical objects mentioned above, and other technical objects, which are not mentioned, will be clearly understood by those skilled in the art to which the present invention belongs from the description below.

### TECHNICAL SOLUTION

A battery pack according to an embodiment disclosed in this document includes a first module including a plurality of battery cells, a second module connected in series to the first module and disposed in a first direction from the first module, and a third module connected in series to the second module and in the first direction from the second module, wherein the first module, the second module and the third module have capacities different from each other.

According to an embodiment, the capacity of the first module may be greater than the capacity of the second module, and the capacity of the second module may be greater than the capacity of the third module.

According to an embodiment, the battery pack may further include a case configured to accommodate the first module, the second module, and the third module, wherein the shortest distance between the case and the first module may be longer than the shortest distance between the case and the third module.

According to an embodiment, a charge/discharge rate of the first module may be less than that of the second module, and a charge/discharge rate of the second module may be less than that of the third module.

According to an embodiment, a temperature change due to the charging or discharging of the first module may be less than a temperature change due to the charging or discharging of the second module, and a temperature change due to the charging or discharging of the second module may be less than a temperature change due to the charging or discharging of the third module.

According to an embodiment, a temperature of a first space, which is a space between the first module and the second module, may be less than a temperature of the second space, which is a space between the second module and the third module.

According to an embodiment, the second module may be configured to cover a side surface of the first module.

According to an embodiment, the numbers of battery cells respectively provided in the first module, the second module and the third module may be different from each other.

According to an embodiment, the battery pack may further include: a cooling part configured to absorb heat from the first module, the second module, and the third module and disposed in the first direction from the third module; an information acquisition part configured to acquire temperature information of the first module, the second module, and the third module; and a controller configured to control the cooling part on the basis of the temperature of at least one of the first module, the second module, or the third module.

According to an embodiment, the capacity of the first module may be greater than the capacity of the second module, and the capacity of the second module may be greater than the capacity of the third module.

According to an embodiment, the control part may be configured to: control the cooling part to an ON state when the temperature of the third module is higher than a first setting value; and control the cooling part to an OFF state when the temperature of the third module is lower than the second setting value.

According to an embodiment, the first setting value may be greater than the second setting value.

According to an embodiment, the controller may be configured to control ON/OFF of the cooling part on the basis of ON/OFF signals of the first module, the second module, and the third module.

A method for operating a battery pack according to an embodiment disclosed in this document includes: acquiring temperature information of at least one of a first module, a second module, or a third module; comparing the temperature information with a first setting value; and controlling a cooling part disposed in a first direction from the third module to an ON state, wherein the second module is connected in series to the first module and disposed in the first direction from the first module, the third module is connected in series to the second module and disposed in the first direction from the second module, and the first to third modules have capacities different from each other.

According to an embodiment, the method may further include: comparing the temperature information with a second setting value; and controlling the cooling part to an OFF state.

Particularities of other embodiments are included in the detailed description and drawings.

### ADVANTAGEOUS EFFECTS

In the battery pack and the method for operating the same according to the embodiments disclosed in this document, the temperature difference between the battery modules may be alleviated.

In the battery pack and the method for operating the same according to the embodiments disclosed in this document, the arrangement of the battery modules having the different capacities may be adjusted to alleviate the temperature difference between the battery modules.

In the battery pack and the method for operating the same according to the embodiments disclosed in this document, the temperature difference between the battery modules may be alleviated to prevent the output of a battery from being limited.

The effects of the battery pack and the method of operating the same according to the disclosure of this document are not limited to the effects mentioned above, and other effects not mentioned will be clearly understood by those skilled in the art according to the disclosure of this document.

### BRIEF DESCRIPTION OF THE DRAWINGS

FIG. 1 is a block diagram illustrating a battery pack according to an embodiment disclosed in this document.
FIG. 2 is a cross-sectional view illustrating a placement and capacity of a module including the battery pack according to an embodiment disclosed in this document.
FIG. 3 is a cross-sectional view illustrating a placement and charging/discharging rate of the module including the battery pack according to an embodiment disclosed in this document.
FIG. 4 is a cross-sectional view illustrating a placement and capacity of a module including the battery pack according to another embodiment disclosed in this document.
FIG. 5 is a cross-sectional view illustrating a placement and charging/discharging rate of the module including the battery pack according to another embodiment disclosed in this document.
FIG. 6 is a flowchart illustrating a method for operating a battery pack according to an embodiment disclosed in this document.

Regarding to the descriptions of the drawings, the same or similar reference numerals may be used for identical or similar components.

### MODE FOR CARRYING OUT THE INVENTION

Hereinafter, embodiments of the present invention are described with reference to the attached drawings. However, this is not intended to limit the present invention to specific embodiments, but should be understood to include various modifications, equivalents, and/or alternatives of the embodiments of the present invention.

It should be understood that the embodiments of this document and the terminology used herein are not intended to limit the technical features described in this document to a specific embodiment, but rather to include various modifications, equivalents, or alternatives of the embodiment. Regarding to the descriptions of the drawings, the similar reference numerals may be used for similar or related components. The singular form of a noun corresponding to an item may include one or more of the items, unless the context clearly indicates otherwise.

In this document, each of the phrases "A or B", "at least one of A and B", "at least one of A or B", "A, B, or C", "at least one of A, B, and C", and "at least one of A, B, or C" may include any one of the items listed together in that phrase, or all possible combinations of them. Terms such as "first", "second", "first", "second", "A", "B", "(a)" or "(b)" may be used merely to distinguish one element from another element, and unless otherwise stated, do not limit the elements in any other respect (e.g., importance or order).

In this document, when a component (e.g., a first component) is referred to as being "linked," "coupled," or "connected," or "coupled" to another component (e.g., a second component), with or without the terms "functionally" or "communicatively," it means that the component can be connected to the other component directly (e.g., wired or wirelessly), or indirectly (e.g., through a third component).

A method according to various embodiments disclosed in this document may be provided as included in a computer program product. The computer program product may be traded between sellers and buyers as commodities. The computer program product may be distributed in the form of a machine-readable storage medium (e.g., compact disc read only memory (CD-ROM)), or may be distributed (e.g., downloaded or uploaded) on-line through an application store or directly between two user devices. In the case of the on-line distribution, at least a portion of the computer program product may be temporarily stored or temporarily created in the machine-readable storage medium such as a memory of a manufacturer's server, an application store's server, or an intermediary server.

According to the embodiments disclosed in this document, each component (e.g., a module or a program) of the components described above may include a single or multiple entities, and some of the multiple entities may be separated and placed in other components. According to the embodiments disclosed in this document, one or more of the aforementioned components or operations may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to embodiments disclosed in this document, the operations performed by the module, the program, or other component may be performed sequentially, in parallel, iteratively, or heuristically, or one or more of the operations may be performed in a different order or omitted, or one or more other operations may be added.

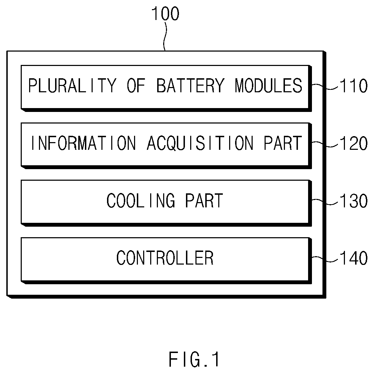

FIG. 1 is a block diagram illustrating a battery pack according to an embodiment disclosed in this document.

Referring to FIG. 1, a battery pack 100 according to an embodiment disclosed in this document may include a plurality of battery modules 110, an information acquisition part 120, a cooling part 130, and a controller 140.

The plurality of battery modules 110 may include a plurality of battery modules. Each battery module included in the plurality of battery modules 110 may be connected in series to each other. Thus, the plurality of battery modules 110 may be charged with the same current. In addition, the plurality of battery modules 110 may be discharged at the same current.

Each of the plurality of battery modules 110 may include a plurality of battery cells. For example, each of the plurality of battery modules 110 may include, but is not limited to, three or four battery cells. The battery cells included in the battery module may be connected in series or parallel to each other.

According to an embodiment, the plurality of battery modules 110 may include a first module 111, a second module 112, and a third module 113. The first module 111, the second module 112, and the third module 113 may be connected in series to each other. That is, the first module 111 may be connected in series to the second module 112 and the third module 113, the second module 112 may be connected in series to the first module 111 and the third module 113, and the third module 113 may be connected in series to the first module 111 and the second module 112.

The first module 111, the second module 112, and the third module 113 may be arranged sequentially along a first direction. That is, the second module 112 may be disposed in the first direction from the first module 111, and the third module 113 may be disposed in the first direction from the second module 112. In other words, the first module 111, the second module 112, and the third module 113 may be arranged in order along the first direction. The arrangement of the first module 111, the second module 112, and the third module 113 will be described later in relation to a placement of the cooling part 130.

Capacities of the first module 111, the second module 112, and the third module 113 may be different from each other. According to an embodiment, the capacity of the first module 111 may be a [Ah], the capacity of the second module 112 may be b [Ah], and the capacity of the third module 113 may be c [Ah]. Here, a, b and c may be different from each other.

According to an embodiment, the capacity of the first module 111 may be greater than the capacity of the second module 112. In addition, the capacity of the second module 112 may be greater than the capacity of the third module 113. That is, a may be greater than b, and b may be greater than c.

According to an embodiment, the number of battery cells included in the first module 111 may be greater than the number of battery modules included in the second module 112. In addition, the number of battery modules included in the second module 112 may be greater than the number of battery modules included in the third module 113. That is, a capacity difference between the first module 111, the second module 112, and the third module 113 may be determined by the number of included identical battery cells, but is not limited thereto. For example, the capacity of the battery cell included in the first module 111 may be greater than the capacity of the battery cell included in the second module 112.

According to an embodiment, current of the first module 111, the second module 112 and the third module 113 may be the same. The first module 111, the second module 112, and the third module 113 are connected in series, and since the modules connected in series share the current with each other, the current of the first module 111, the second module 112, and the third module 113 may be the same.

According to an embodiment, the charging/discharging rates of the first module 111, the second module 112, and the third module 113 may be different from each other. Since the first module 111, the second module 112, and the third module 113 have different capacities, and the current of the first module 111, the second module 112, and the third module 113 are the same, the charging/discharging rates of the first module 111, the second module 112, and the third module 113 may be different from each other. That is, the charging/discharging rates of the first module 111, the second module 112, and the third module 113 may be different from each other.

According to an embodiment, the charging/discharging rate of the first module 111 may be A [C], the charging/discharging rate of the second module 112 may be B [C], and the charging/discharging rate of the third module 113 may be C [C]. Here, A, B and C may be different from each other.

According to an embodiment, the charging/discharging rate of the first module 111 may be less than the charging/discharging rate of the second module 112. In addition, the charging/discharging rate of the second module 112 may be less than the charging/discharging rate of the third module 113. That is, A may be less than B, and B may be less than C.

According to an embodiment, a temperature change due to the charging or discharging of each of the plurality of battery modules 110 may be proportional to the charging/discharging rate of each of the plurality of battery modules 110. Heat generated by charging each of the plurality of battery modules 110 and a temperature rise due to the generated heat may be proportional to the charging/discharging rate of each of the plurality of battery modules 110. Heat generated by discharging each of the plurality of battery modules 110 and a temperature rise due to the generated heat may be proportional to the charging/discharging rate of each of the plurality of battery modules 110. That is, when the charging/discharging rate is low, the temperature change due to the charging or discharging may be small, and when the charging/discharging rate is high, the temperature change due to the charging or discharging may be large.

According to an embodiment, the temperature change due to the charging or discharging of the first module 111 may be less than the temperature change due to the charging or discharging of the second module 112, and the temperature change due to the charging or discharging of the second module 112 may be less than the temperature change due to the charging or discharging of the third module 113. That is, since the charging/discharging rate of the first module 111 is less than that of the second module 112, the temperature change due to the charging or discharging of the first module 111 may be less than the temperature change due to the charging or discharging of the second module 112. In addition, since the charging/discharging rate of the second module 112 is less than that of the third module 113, the temperature change due to the charging or discharging of the second module 112 may be less than the temperature change due to the charging or discharging of the third module 113. Thus, a magnitude of the temperature change due to the charging or discharging of the plurality of battery modules 110 may increase in order of the first module 111, the second module 112, and the third module 113.

A space between the first module 111 and the second module 112 may be defined as a first space. In addition, a space between the second module 112 and the third module 113 may be defined as a second space. According to an embodiment, a temperature of the first space may be less than a temperature of the second space. That is, since a temperature rise of the first module 111 is less than a temperature rise of the second module 112, and a temperature rise of the second module 112 is less than a temperature rise of the third module 113, a temperature rise of the first space may be less than a temperature rise of the second space. Thus, the temperature of the first space may be less than the temperature of the second space.

According to an embodiment, the shortest distances between each of the first module 111, the second module 112, and the third module 113 and the cooling part 130 may be different from each other. The shortest distance between the first module 111 and the cooling part 130 may be greater than the shortest distance between the second module 112 and the cooling part 130. The shortest distance between the second module 112 and the cooling part 130 may be greater than the shortest distance between the third module 113 and the cooling part 130. That is, lengths of the shortest distances between each of the first module 111, the second module 112, and the third module 113 and the cooling part 130 may decrease in order of the first module 111, the second module 112, and the third module 113. In other words, the third module 113 may be disposed closest to the cooling part 130, and the first module 111 may be disposed farthest from the cooling part 130.

The information acquisition part 120 may acquire information on the plurality of battery modules 110. According to an embodiment, the information acquisition part 120 may acquire temperature information of the plurality of battery modules 110. For example, the information acquisition part 120 may acquire temperature information of each of the first module 111, the second module 112, and the third module 113. According to an embodiment, the information acquisition part 120 may further acquire temperature information of at least one of the first space, the second space, or the battery case.

According to an embodiment, the information acquisition part 120 may transmit information on the plurality of acquired battery modules 110 to the controller 140.

The cooling part 130 may cool the plurality of battery modules 110. According to an embodiment, the cooling part 130 may absorb heat from the plurality of battery modules 110 to cool the plurality of battery modules 110. For example, the cooling part 130 may cool the first module 111, the second module 112, and the third module 113. That is, the cooling part 130 may absorb the heat from each of the first module 111, the second module 112, and the third module 113 to cool the first module 111, the second module 112, and the third module 113.

According to an embodiment, an amount of heat of the plurality of battery modules 110 absorbed by the cooling part 130 may be inversely proportional to the distance between the cooling part 130 and each of the plurality of battery modules 110. That is, the cooling part 130 may absorb a large amount of heat from the adjacent battery module and a small amount of heat from the distant battery module. According to an embodiment, the amount of heat absorbed by the cooling part 130 from each of the first module 111, the second module 112, and the third module 113 may be different from each other. Specifically, since the distance between the cooling part 130 and the first module 111 is greater than the distance between the cooling part 130 and the second module 112, the amount of heat that is absorbed from the first module 111 by the cooling part 130 may be less than the amount of heat that is absorbed from the second module 112. In addition, since the distance between the cooling part 130 and the second module 112 is greater than the distance between the cooling part 130 and the third module 113, the amount of heat that is absorbed from the second module 112 by the cooling part 130 may be less than the amount of heat that is absorbed from the third module 113. That is, the cooling part 130 may maximally cool the third module 113 and minimally cool the first module 111.

According to an embodiment, the cooling part 130 may maximally cool the third module 113 having the greatest temperature rise and minimally cool the first module 111 having the smallest temperature rise, and thus, the battery pack 100 may alleviate the temperature difference between the plurality of battery modules 110. Thus, the battery pack 100 may alleviate the temperature difference between each of the plurality of battery modules 110 to prevent an output of the battery from being limited.

The controller 140 may control the cooling part 130. According to an embodiment, the controller 140 may control the cooling part 130 on the basis of the temperature information received from the information acquisition part 120. That is, the controller 140 may control the cooling part 130 on the basis of the temperature of at least one of the first module 111, the second module 112, or the third module 113. Here, the temperature of at least one of the first module 111, the second module 112, or the third module 113 may be defined as temperature information.

When the cooling part 130 is in an OFF state, the controller 140 may compare the temperature information with a first setting value. Here, the first setting value may be set on the basis of a type of battery, an external temperature, whether a vehicle is driven, etc. The first setting value may be used as a basis for determining whether the battery needs to be cooled.

According to an embodiment, when the temperature information is equal to or greater than the first setting value, the controller 140 may control the cooling part 130 to be in an ON state. That is, the controller 140 may change the state of the cooling part 130 from the OFF state to the ON state. In addition, if the temperature information is less than the first setting value, the controller 140 may not issue a separate command to the cooling part 130. That is, the controller 140 may maintain the cooling part 130 in the OFF state.

When the cooling part 130 is in the ON state, the controller 140 may compare the temperature information with a second setting value. Here, the second setting value may be set on the basis of the type of battery, the external temperature, whether the vehicle is driven, etc. The second setting value may be used as a basis for determining whether the battery needs to be cooled.

According to an embodiment, when the temperature information is equal to or greater than the second setting value, the controller 140 may control the cooling part 130 to the OFF state. That is, the controller 140 may change the state of the cooling part 130 from the ON state to the OFF state. In addition, if the temperature information is less than the second setting value, the controller 140 may not issue a separate command to the cooling part 130. That is, the controller 140 may maintain the cooling part 130 in the ON state.

According to an embodiment, the first setting value may be greater than the second setting value. That is, the first setting value, which is a criterion for the controller 140 to control the cooling part 130 to the ON state, may be greater than the second setting value, which is a criterion for the controller 140 to control the cooling part 130 to the OFF state, but is not limited thereto.

Since the controller 140 controls the state of the cooling part 130 on the basis of the temperature information, the battery pack 100 may control whether or not the cooling part 130 operates depending on whether the cooling is needed. That is, the battery pack 100 may improve cooling efficiency and energy efficiency of the battery pack 100 by operating the cooling part 130 only when the cooling is needed.

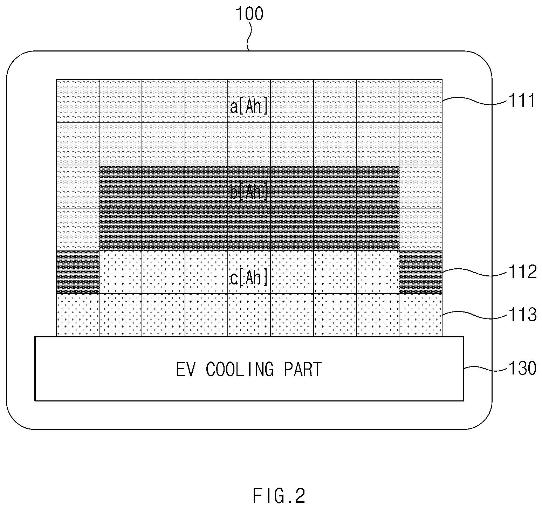

FIG. 2 is a cross-sectional view illustrating a placement and capacity of the module including the battery pack according to an embodiment disclosed in this document.

Referring to FIG. 2, capacities of the first module 111, the second module 112, and the third module 113 according to an embodiment may be different from each other. According to an embodiment, the capacity of the first module 111 may be a [Ah], the capacity of the second module 112 may be b [Ah], and the capacity of the third module 113 may be c [Ah]. Here, a, b and c may be different from each other.

According to an embodiment, the capacity of the first module 111 may be greater than the capacity of the second module 112. In addition, the capacity of the second module 112 may be greater than the capacity of the third module 113. That is, a may be greater than b, and b may be greater than c.

According to an embodiment, the number of battery cells included in the first module 111 may be greater than the number of battery modules included in the second module 112. In addition, the number of battery modules included in the second module 112 may be greater than the number of battery modules included in the third module 113. That is, a capacity difference between the first module 111, the second module 112, and the third module 113 may be determined by the number of included identical battery cells, but is not limited thereto. For example, the capacity of the battery cell included in the first module 111 may be greater than the capacity of the battery cell included in the second module 112.

According to an embodiment, the shortest distances between each of the first module 111, the second module 112, and the third module 113 and the cooling part 130 may be different from each other. The shortest distance between the first module 111 and the cooling part 130 may be greater than the shortest distance between the second module 112 and the cooling part 130. The shortest distance between the second module 112 and the cooling part 130 may be greater than the shortest distance between the third module 113 and the cooling part 130. That is, lengths of the shortest distances between each of the first module 111, the second module 112, and the third module 113 and the cooling part 130 may decrease in order of the first module 111, the second module 112, and the third module 113. In other words, the third module 113 may be disposed closest to the cooling part 130, and the first module 111 may be disposed farthest from the cooling part 130.

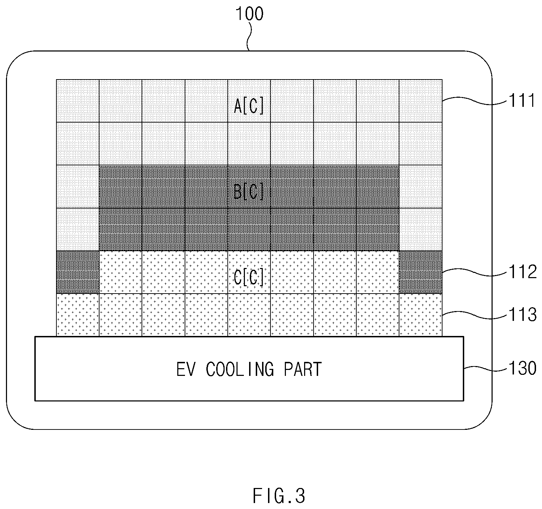

FIG. 3 is a cross-sectional view illustrating a placement and charging/discharging rate of the module including the battery pack according to an embodiment disclosed in this document.

Referring to FIG. 3, the current of the first module 111, the second module 112, and the third module 113 may be the same. The first module 111, the second module 112, and the third module 113 may be connected in series, and since the modules connected in series share the current with each other, the current of the first module 111, the second module 112, and the third module 113 may be the same.

According to an embodiment, the charging/discharging rates of the first module 111, the second module 112, and the third module 113 may be different from each other. Since the first module 111, the second module 112, and the third module 113 have different capacities, and the current of the first module 111, the second module 112, and the third module 113 are the same, the charging/discharging rates of the first module 111, the second module 112, and the third module 113 may be different from each other. That is, the charging/discharging rates of the first module 111, the second module 112, and the third module 113 may be different from each other.

According to an embodiment, the charging/discharging rate of the first module 111 may be A [C], the charging/discharging rate of the second module 112 may be B [C], and the charging/discharging rate of the third module 113 may be C [C]. Here, A, B and C may be different from each other.

According to an embodiment, the charging/discharging rate of the first module 111 may be less than the charging/discharging rate of the second module 112. In addition, the charging/discharging rate of the second module 112 may be less than the charging/discharging rate of the third module 113. That is, A may be less than B, and B may be less than C.

According to an embodiment, a temperature change due to the charging or discharging of each of the plurality of battery modules 110 may be proportional to the charging/discharging rate of each of the plurality of battery modules 110. Heat generated by charging each of the plurality of battery modules 110 and a temperature rise due to the generated heat may be proportional to the charging/discharging rate of each of the plurality of battery modules 110. Heat generated by discharging each of the plurality of battery modules 110 and a temperature rise due to the generated heat may be proportional to the charging/discharging rate of each of the plurality of battery modules 110. That is, when the charging/discharging rate is low, the temperature change due to the charging or discharging may be small, and when the charging/discharging rate is high, the temperature change due to the charging or discharging may be large.

According to an embodiment, the temperature change due to the charging or discharging of the first module 111 may be less than the temperature change due to the charging or discharging of the second module 112, and the temperature change due to the charging or discharging of the second module 112 may be less than the temperature change due to the charging or discharging of the third module 113. That is, since the charging/discharging rate of the first module 111 is less than that of the second module 112, the temperature change due to the charging or discharging of the first module 111 may be less than the temperature change due to the charging or discharging of the second module 112. In addition, since the charging/discharging rate of the second module 112 is less than that of the third module 113, the temperature change due to the charging or discharging of the second module 112 may be less than the temperature change due to the charging or discharging of the third module 113. Thus, a magnitude of the temperature change due to the charging or discharging of the plurality of battery modules 110 may increase in order of the first module 111, the second module 112, and the third module 113.

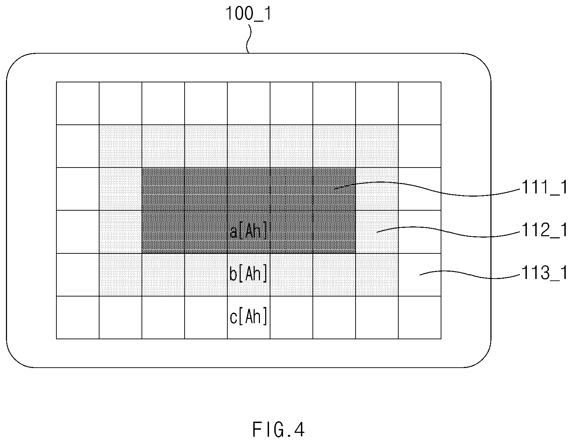

FIG. 4 is a cross-sectional view illustrating a placement and capacity of a module including the battery pack according to another embodiment disclosed in this document.

Referring to FIG. 4, a battery pack 100_1 according to another embodiment may include a plurality of battery modules 110_1. The plurality of battery modules 110_1 may include a plurality of battery modules. Each battery module included in the plurality of battery modules 110_1 may be connected in series to each other. Thus, the plurality of battery modules 110_1 may be charged with the same current. In addition, the plurality of battery modules 110_1 may be discharged at the same current.

According to an embodiment, the plurality of battery modules 110_1 may include a first module 111_1, a second module 112_1, and a third module 113_1. The first module 111_1, the second module 112_1, and the third module 113_1 may be connected in series to each other.

The battery pack 100_1 may include a case. Here, the case may define an outer appearance of the battery pack 100_1 and may accommodate the plurality of battery modules 110_1. That is, the case may have a rectangular hexahedral shape that accommodates the plurality of battery modules 110_1, but is not limited thereto. The case may define an internal space.

The third module 113_1 may be disposed outside the internal space. According to an embodiment, the third module 113_1 may be disposed to surround an outer portion of the internal space defined by the case. For example, the third module 113_1 may be in direct or indirect contact with the case, but is not limited thereto.

The second module 112_1 may be disposed inside the internal space. According to an embodiment, the second module 112_1 may be disposed inside a position at which the third module 113_1 is disposed in the internal space. For example, the second module 112_1 may be disposed to be in direct or indirect contact with the third module 113_1. Thus, the second module 112_1 may be disposed to be spaced apart from the case. That is, the third module 113_1 may be disposed between the second module 112_1 and the case. In other words, the case and the second module 112_1 may be disposed in opposite directions by using the third module 113_1 as a center. Thus, the third module 113_1 may cover a side surface of the second module 112_1.

The first module 111_1 may be disposed inside the internal space. According to an embodiment, the first module 111_1 may be disposed inside a position at which the second module 112_1 is disposed in the internal space. For example, the first module 111_1 may be disposed to be in direct or indirect contact with the second module 112_1. Thus, the first module 111_1 may be disposed to be spaced apart from the third module 113_1 and the case. That is, the second module 112_1 may be disposed between the first module 111_1 and the third module 113_1. In other words, the first module 111_1 and the third module 113_1 may be arranged in opposite directions by using the second module 112_1 as a center. Thus, the second module 112_1 may cover a side surface of the first module 111_1.

According to an embodiment, the shortest distances between each of the first module 111_1, the second module 112_1, and the third module 113_1 and the case may be different from each other. For example, the shortest distance between the first module 111_1 and the case may be greater than the shortest distance between the second module 112_1 and the case. The shortest distance between the second module 112_1 and the case may be greater than the shortest distance between the third module 113_1 and the case. Thus, the shortest distance between the first module 111_1 and the case may be greater than the shortest distance between the third module 113_1 and the case. That is, the third module 113_1, the second module 112_1, and the first module 111_1 may be sequentially arranged in a direction toward the center of the battery pack 100_1 from the case defining an outer appearance of the battery pack 100_1.

Capacities of the first module 111_1, the second module 112_1, and the third module 113_1 may be different from each other. According to an embodiment, the capacity of the first module 111_1 may be a [Ah], the capacity of the second module 112_1 may be b [Ah], and the capacity of the third module 113_1 may be c [Ah]. Here, a, b and c may be different from each other.

According to an embodiment, the capacity of the first module 111_1 may be greater than the capacity of the second module 112_1. In addition, the capacity of the second module 112_1 may be greater than the capacity of the third module 113_1. That is, a may be greater than b, and b may be greater than c.

According to an embodiment, the number of battery cells included in the first module 111_1 may be greater than the number of battery modules included in the second module 112_1. In addition, the number of battery modules included in the second module 112_1 may be greater than the number of battery modules included in the third module 113_1. That is, a capacity difference between the first module 111_1, the second module 112_1, and the third module 113_1 may be determined by the number of included identical battery cells, but is not limited thereto. For example, the capacity of the battery cell included in the first module 111_1 may be greater than the capacity of the battery cell included in the second module 112_1.

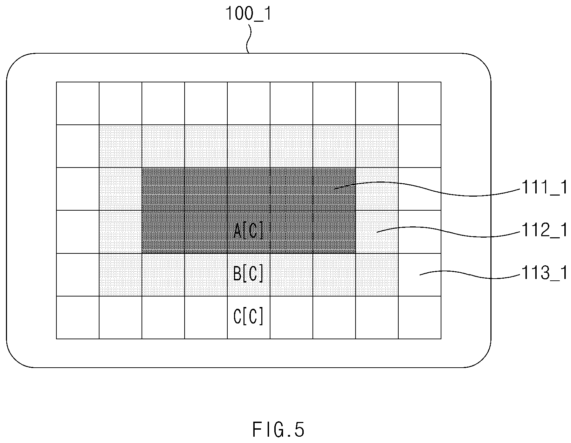

FIG. 5 is a cross-sectional view illustrating a placement and charging/discharging rate of the module including the battery pack according to another embodiment disclosed in this document.

Referring to FIG. 5, current of the first module 111_1, the second module 112_1, and the third module 113_1 may be the same. The first module 111_1, the second module 112_1, and the third module 113_1 may be connected in series, and since the series-connected modules share the current with each other, the current of the first module 111_1, the second module 112_1, and the third module 113_1 may be the same.

According to an embodiment, charging/discharging rates of the first module 111_1, the second module 112_1, and the third module 113_1 may be different from each other. Since the first module 111_1, the second module 112_1, and the third module 113_1 have different capacities, and the current of the first module 111_1, the second module 112_1, and the third module 113_1 are the same, the charging/discharging rates of the first module 111_1, the second module 112_1, and the third module 113_1 may be different from each other. That is, the charging/discharging rates of the first module 111_1, the second module 112_1, and the third module 113_1 may be different from each other.

According to an embodiment, the charging/discharging rate of the first module 111_1 may be A [C], the charging/discharging rate of the second module 112_1 may be B [C], and the charging/discharging rate of the third module 113_1 may be C [C]. Here, A, B and C may be different from each other.

According to an embodiment, the charging/discharging rate of the first module 111_1 may be less than the charging/discharging rate of the second module 112_1. In addition, the charging/discharging rate of the second module 112_1 may be less than that of the third module 113_1. That is, A may be less than B, and B may be less than C.

According to an embodiment, a temperature change due to the charging or discharging of each of the plurality of battery modules 110_1 may be proportional to the charging/discharging rate of each of the plurality of battery modules 110_1. Heat generated by charging each of the plurality of battery modules 110_1 and a temperature rise due to the generated heat may be proportional to the charging/discharging rate of each of the plurality of battery modules 110_1. Heat generated by discharging each of the plurality of battery modules 110_1 and the temperature rise due to the generated heat may be proportional to the charging/discharging rate of each of the plurality of battery modules 110_1. That is, when the charging/discharging rate is low, the temperature change due to the charging or discharging may be small, and when the charging/discharging rate is high, the temperature change due to the charging or discharging may be large.

According to an embodiment, the temperature change due to the charging or discharging of the first module 111_1 may be less than the temperature change due to the charging or discharging of the second module 112_1, and the temperature change due to the charging or discharging of the second module 112_1 may be less than the temperature change due to the charging or discharging of the third module 113_1. That is, since the charging/discharging rate of the first module 111_1 is less than that of the second module 112_1, the temperature change due to the charging or discharging of the first module 111_1 may be less than the temperature change due to the charging or discharging of the second module 112_1. In addition, since the charging/discharging rate of the second module 112_1 is less than that of the third module 113_1, the temperature change due to the charging or discharging of the second module 112_1 may be less than the temperature change due to the charging or discharging of the third module 113_1. Thus, a magnitude of the temperature change due to the charging or discharging of the plurality of battery modules 110_1 may increase in order of the first module 111_1, the second module 112_1, and the third module 113_1.

A space between the first module 111_1 and the second module 112_1 may be defined as a first space. In addition, a space between the second module 112_1 and the third module 113_1 may be defined as a second space. According to an embodiment, a temperature of the first space may be less than a temperature of the second space. That is, since a temperature rise of the first module 111_1 is less than a temperature rise of the second module 112_1, and a temperature rise of the second module 112_1 is less than a temperature rise of the third module 113_1, a temperature rise of the first space may be less than a temperature rise of the second space. Thus, the temperature of the first space may be less than the temperature of the second space.

According to an embodiment, a temperature outside the battery pack 100_1 may be less than a temperature inside the battery pack 100_1. Thus, heat inside the battery pack 100_1 may be transferred to the outside of the battery pack 100_1. The case may define an outer appearance of the battery pack 100_1, and an amount of heat transferred from the inside of the battery pack 100_1 to the outside of the battery pack 100_1 may be proportional to a distance from the outside of the battery pack 100_1, and thus, an amount of heat transferred from the plurality of battery modules 110_1 to the outside may be proportional to the distance from the case. That is, the amount of heat transferred from the third module 113_1 to the outside of the battery pack 100_1 may be greater than the amount of heat transferred from the second module 112_1 to the outside of the battery pack 100_1. In addition, the amount of heat transferred from the second module 112_1 to the outside of the battery pack 100_1 may be greater than the amount of heat transferred from the first module 111_1 to the outside of the battery pack 100_1. That is, a degree to which the plurality of battery modules 110_1 are cooled by the temperature outside the battery pack 100_1 may increase in order of the third module 113_1, the second module 112_1, and the first module 111_1.

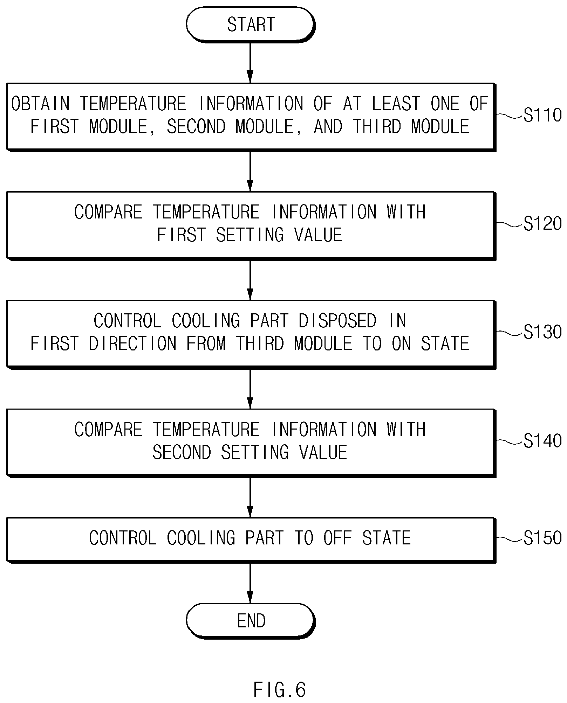

FIG. 6 is a flowchart illustrating a method for operating a battery pack according to an embodiment disclosed in this document.

An embodiment illustrated in FIG. 6 is only an example, and the operating order according to various embodiments of the present invention may be different from that illustrated in FIG. 6, and some of the processes illustrated in FIG. 6 may be omitted, an order of the processes may be changed, or the processes may be combined.

Referring to FIG. 6, a method for operating a battery pack 100 may include an operation (S110) of obtaining temperature information of at least one of a first module 111, a second module 112, or a third module 113, an operation (S120) of comparing the temperature information with a first setting value, an operation (S130) of controlling a cooling part 130 disposed in a first direction from the third module 113 to an ON state, an operation (S140) of comparing the temperature information with a second setting value, and an operation (S150) of controlling the cooling part 130 to an OFF state.

Hereinafter, the operations S110 to S150 are specifically described with reference to FIGS. 1 to 5.

In operation S110, the battery pack 100 may acquire the temperature information of at least one of the first module 111, the second module 112, or the third module 113.

The battery pack 100 may acquire information on a plurality of battery modules 110. According to an embodiment, the battery pack 100 may acquire temperature information of the plurality of battery modules 110. For example, the battery pack 100 may acquire temperature information of each of the first module 111, the second module 112, and the third module 113. According to an embodiment, the battery pack 100 may further acquire temperature information of at least one of a first space, a second space, or a battery case.

In operation S120, the battery pack 100 may compare the temperature information with the first setting value.

The battery pack 100 may control the cooling part 130. According to an embodiment, the battery pack 100 may control the cooling part 130 on the basis of the temperature information received from the battery pack 100. That is, the battery pack 100 may control the cooling part 130 on the basis of the temperature of at least one of the first module 111, the second module 112, or the third module 113. Here, the temperature of at least one of the first module 111, the second module 112, or the third module 113 may be defined as temperature information.

When the cooling part 130 is in the OFF state, the battery pack 100 may compare the temperature information with the first setting value. Here, the first setting value may be set on the basis of a type of battery, an external temperature, whether a vehicle is driven, etc. The first setting value may be used as a basis for determining whether the battery needs to be cooled.

In operation S130, the battery pack 100 may control the cooling part 130 disposed in the first direction from the third module 113 to the ON state.

According to an embodiment, when the temperature information is equal to or greater than the first setting value, the battery pack 100 may control the cooling part 130 to the ON state. That is, the battery pack 100 may change the state of the cooling part 130 from the OFF state to the ON state. In addition, if the temperature information is less than the first setting value, the battery pack 100 may not issue a separate command to the cooling part 130. That is, the battery pack 100 may maintain the cooling part 130 in the OFF state.

In operation S140, the battery pack 100 may compare the temperature information with the second setting value.

When the cooling part 130 is in the ON state, the battery pack 100 may compare the temperature information with the second setting value. Here, the second setting value may be set on the basis of the type of battery, the external temperature, whether the vehicle is driven, etc. The second setting value may be used as a basis for determining whether the battery needs to be cooled.

In operation S150, the battery pack 100 may control the cooling part 130 to the OFF state.

According to an embodiment, when the temperature information is equal to or greater than the second setting value, the battery pack 100 may control the cooling part 130 to the OFF state. That is, the battery pack 100 may change the state of the cooling part 130 from the ON state to the OFF state. In addition, if the temperature information is less than the second setting value, the battery pack 100 may not issue a separate command to the cooling part 130. That is, the battery pack 100 may maintain the cooling part 130 in the ON state.

According to an embodiment, the first setting value may be greater than the second setting value. That is, the first setting value, which is a criterion for the battery pack 100 to control the cooling part 130 to the ON state, may be greater than the second setting value, which is a criterion for the battery pack 100 to control the cooling part 130 to the OFF state, but is not limited thereto.

The above description is merely an illustrative description of the technical idea disclosed in this document, and those skilled in the art in the art to which the embodiments disclosed in this document belong may make various modifications and variations without departing from the essential characteristics of the embodiments disclosed in this document.

Accordingly, the embodiments disclosed in this document are intended to illustrate rather than limit the technical ideas disclosed in this document, and the scope of the technical ideas disclosed in this document is not limited by these embodiments. The scope of protection of the technical ideas disclosed in this document should be interpreted by the scope of the claims below, and all technical ideas within the equivalent scope should be interpreted as being included in the scope of rights of this document.

### [Description of the Symbols]

- 100:: Battery pack
- 110:: Plurality of battery modules
- 120:: Information acquisition part
- 130:: Cooling part
- 140:: Controller

## Claims

1. A battery pack comprising:
a first module comprising a plurality of battery cells;
a second module connected in series to the first module and disposed in a first direction from the first module; and
a third module connected in series to the second module and in the first direction from the second module,
wherein the first module, the second module and the third module have capacities different from each other.

2. The battery pack of claim 1, wherein the capacity of the first module is greater than the capacity of the second module, and
the capacity of the second module is greater than the capacity of the third module.

3. The battery pack of claim 2, further comprising a case configured to accommodate the first module, the second module, and the third module,
wherein the shortest distance between the case and the first module is longer than the shortest distance between the case and the third module.

4. The battery pack of claim 2, wherein a charge/discharge rate of the first module is less than that of the second module, and
a charge/discharge rate of the second module is less than that of the third module.

5. The battery pack of claim 1, wherein a temperature change due to the charging or discharging of the first module is less than a temperature change due to the charging or discharging of the second module, and
a temperature change due to the charging or discharging of the second module is less than a temperature change due to the charging or discharging of the third module.

6. The battery pack of claim 5, wherein a temperature of a first space, which is a space between the first module and the second module, is less than a temperature of the second space, which is a space between the second module and the third module.

7. The battery pack of claim 1, wherein the second module is configured to cover a side surface of the first module.

8. The battery pack of claim 1, wherein the numbers of battery cells respectively provided in the first module, the second module and the third module are different from each other.

9. The battery pack of claim 1, further comprising:
a cooling part configured to absorb heat from the first module, the second module, and the third module and disposed in the first direction from the third module;
an information acquisition part configured to acquire temperature information of the first module, the second module, and the third module; and
a controller configured to control the cooling part on the basis of the temperature of at least one of the first module, the second module, or the third module.

10. The battery pack of claim 9, wherein the capacity of the first module is greater than the capacity of the second module, and
the capacity of the second module is greater than the capacity of the third module.

11. The battery pack of claim 9, wherein the control part is configured to:
control the cooling part to an ON state when the temperature of the third module is higher than a first setting value; and
control the cooling part to an OFF state when the temperature of the third module is lower than a second setting value.

12. The battery pack of claim 11, wherein the first setting value is greater than the second setting value.

13. The battery pack of claim 9, wherein the controller is configured to control ON/OFF of the cooling part on the basis of ON/OFF signals of the first module, the second module, and the third module.

14. A method for operating a battery pack, comprising:
acquiring temperature information of at least one of a first module, a second module, or a third module;
comparing the temperature information with a first setting value; and
controlling a cooling part disposed in a first direction from the third module to an ON state,
wherein the second module is connected in series to the first module and disposed in the first direction from the first module,
the third module is connected in series to the second module and disposed in the first direction from the second module, and
the first to third modules have capacities different from each other.

15. The method of claim 14, further comprising:
comparing the temperature information with a second setting value; and
controlling the cooling part to an OFF state.
